# EUROPEAN PATENT SPECIFICATION

(11) **EP 2 659 745 B1**
(45) Date of publication and mention of the grant of the patent: **09.01.2019**
(21) Application number: 11852309.1
(22) Date of filing: 11.10.2011
(51) Int. Cl.: H05B 37/02, H05B 37/03, H02M 1/32, H05B 33/08

(54) **POWER SUPPLY**
STROMVERSORGUNG
ALIMENTATION ÉLECTRIQUE

(30) Priority: 27.12.2010 KR 20100136074
(43) Date of publication of application: 06.11.2013
(73) Proprietor: LG Innotek Co., Ltd., Seoul, 04637 (KR)
(72) Inventor: KIM, Sung Eun, Seoul 100-714 (KR)
(74) Representative: DREISS Patentanwälte PartG mbB
(86) International application number: PCT/KR2011/007533
(87) International publication number: WO 2012/091258

(56) References cited:
- JP-A- 2010 124 614
- KR-A- 20090 017 145
- KR-A- 20100 039 969
- KR-B1- 100 728 465
- US-A1- 2007 170 876
- US-A1- 2010 091 220

## Description

### Technical Field

The present disclosure relates to a power supply.

### Background Art

Generally, Liquid Crystal Displays (LCDs) include two display substrates where an electric field applying electrode is displayed, and a liquid crystal layer that has dielectric anisotropy and is disposed between the two substrates. LCDs apply a voltage to an electric field applying electrode to generate an electric field in a liquid crystal layer, change the voltage to adjust intensity of the electric field, and thus adjust a transmittance of light passing through the liquid crystal layer, thereby displaying a desired image.

Since LCDs cannot self emit light, the LCDs require a separate light source called a backlight, and the light source is being replaced by Light Emitting Diodes (LEDs).

Since LEDs are semiconductor devices, LEDs have long service life, fast lighting speed, low consumption power, and excellent color reproductivity. Moreover, LEDs are robust to impact, and facilitate the miniaturizing and thinning of LEDs. Therefore, a backlight using LEDs are being mounted on medium and large LCDs such as computer monitors and televisions (TVs), in addition to small LCDs mounted on mobile phones, etc.

US 2010/091220 A1 discloses a backlight unit with a protection circuit that detects an open-lamp-protection voltage, and US 2007/170876 A1 discloses an LED lighting control apparatus and a method of lighting control with a forward voltage detection circuit.

### Disclosure of Invention

### Technical Problem

Embodiments provide a power supply with a new openness detection circuit.

Embodiments also provide a power supply which detects a circuit-opened state of at least one LED included in a light emission unit having a plurality of LEDs, thereby regulating a supplied power.

Embodiments also provide a power supply which automatically varies a supplied current according to a circuit-opened state of an arbitrary LED in a light emission unit.

### Solution to Problem

In one embodiment, a power supply includes: at least one light emission unit including a plurality of serially connected Light Emitting Diodes (LEDs); a power source supplying a Direct Current (DC) voltage to the light emission unit; an openness detection circuit varying a reference potential with a voltage which is detected from both ends of at least one of the LEDs in the light emission unit; and a feedback control unit regulating an output current of the power source according to the reference potential of the openness detection circuit.

### Advantageous Effects of Invention

According to embodiments, a light emission unit including LEDs and a lighting system such as a light unit including the light emission unit can be improved in reliability.

According to embodiments, a normally driven LED can be protected.

According to embodiments, by detecting a circuit-opened state of an arbitrary LED to automatically vary a supplied current, provided can be an openness detection circuit corresponding to a circuit-opened state of a light emission unit.

### Brief Description of Drawings

FIG. 1 is a circuit diagram illustrating a power supply according to an embodiment.
FIG. 2 is a circuit diagram illustrating an example of a constant current control method according to an embodiment.
FIG. 3 is a circuit diagram illustrating the flow of a current based on the opening of a light emission unit in the circuit diagram of FIG. 2.
FIG. 4 is a graph showing a relationship between a voltage and a current which flow in a light emission unit.
FIG. 5 is a circuit diagram illustrating an example of a power supply for detecting an opened state of each light emission unit according to an embodiment.
FIG. 6 is a circuit diagram illustrating another example of a power supply for detecting an opened state of each light emission unit according to an embodiment.
FIG. 7 is a circuit diagram illustrating a power supply for detecting opened states of a plurality of light emission units according to an embodiment.
FIG. 8 is a diagram illustrating a light emitting device according to an embodiment.

### Mode for the Invention

Hereinafter, embodiments of the present disclosure will be described below in more detail with reference to the accompanying drawings.

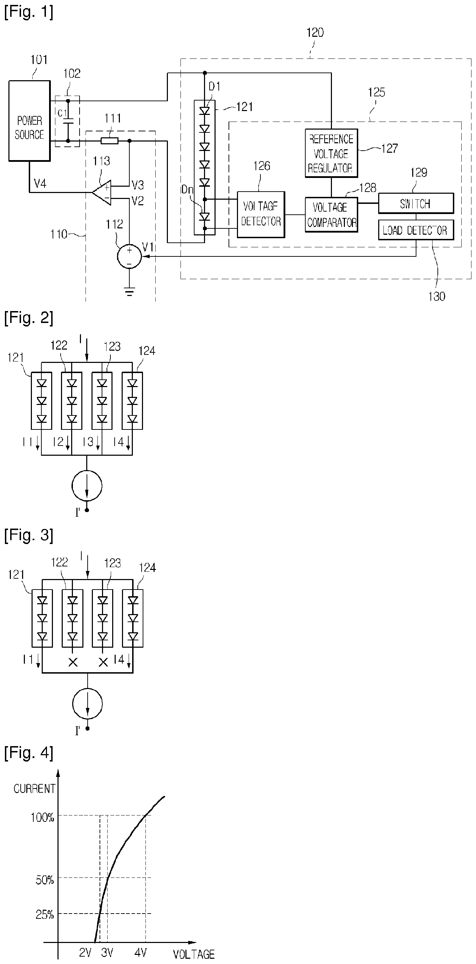

Referring to FIG. 1, a power supply according to an embodiment includes a power source 101, a light emission module 120 including at least one light emission unit 121, and a feedback control unit 110.

The power source 101 may supply a Direct Current (DC) voltage, for example, include a switched-mode power supply (SMPS). The power supply includes a filter 102 that is connected to an output terminal of the power source 101 in parallel. The filter 102 includes a capacitor C1, and removes a ripple included in the DC voltage.

The light emission module 120 includes at least one board, which includes at least one light emission unit 121. The board may be a flexible substrate, a rigid substrate, or a metal core Printed Circuit Board (PCB), a material of which may be resin or ceramic, but the embodiment is not limited thereto.

Each board includes at least one light emission unit 121, each of which includes a plurality of light emitting diodes LD1 to LDn. The light emitting diodes LD1 to LDn may be connected in series. Herein, when each board includes the plurality of light emission units 121, the light emission units 121 may be connected in parallel.

Each of the light emitting diodes LD1 to LDn is LED is an LED, and may emit light of a visible light band such as blue, red, green, and white or emit light of a ultraviolet (UV) band. However, the embodiment is not limited thereto.

Input terminals of the respective light emission units 121 are connected to a positive polarity terminal of the power source 101 in common, and output terminals of respective light emission units 121 are connected to a negative polarity terminal of the power source 101 in common. The number of LEDs LD1 to LDn in each light emission unit 121 may vary according to a voltage supplied from the power source 101, but the embodiment is not limited thereto. A current flowing through each light emission unit 121 is transferred to the power source 101 through a current regulator 111 of the feedback control unit 110.

The light emission module 120 may include an openness detection circuit 125, which may be disposed on each board or a main board, but the embodiment is not limited thereto.

The openness detection circuit 125 includes a voltage detector 126, a reference voltage regulator 127, a voltage comparator 128, a switch 129, and a load detector 130. The openness detection circuit 125 detects whether each light emission unit 11 is circuit-opened and outputs a control voltage. The feedback control unit 110 includes a reference potential unit 112 and a comparator 113. The feedback control unit 110 may change an output of the comparator 113 to disconnect an output of the power source 101 or regulate an output current, according to the control voltage.

The reference voltage regulator 127 may be connected to an input terminal of each light emission unit 121 to operate according to a voltage inputted to each light emission unit 121. As another example, the reference voltage regulator 127 may receive another voltage to operate. The voltage detector 126 is connected to both ends of at least one LED LDn, namely, an anode and cathode thereof. The voltage detector 126 may check a voltage that is applied across both ends of the LED LDn, and detect a voltage when the LED LDn is in an opened state or a normal state. The voltage comparator 128 compares a voltage detected by the voltage detector 126 with a reference voltage of the reference voltage regulator 127, and outputs a control signal according to the compared result.

When the Nth LED LDn connected to the voltage detector 126 is opened, the voltage comparator 128 turns on/off the switch 129 with the voltage detected by the voltage detector 126, thereby varying reference potential V1.

When any one of the LEDs LD to LDm is opened instead of the Nth LED LDn connected to the voltage detector 126, the voltage comparator 128 turns on/off the switch 129 with the voltage detected by the voltage detector 126, thereby varying reference potential V1. Herein, the LEDs LD1 to LDn of the light emission unit 121 may be divided into a first group of the LEDs LD1 to LDm and a second group including the LED LDn. The LEDs LD1 to LDm of the first group are LEDs other than the LED LDn connected to both ends of the voltage detector 126, and the LED LDn of the second group is an LED other than those of the first group Herein, the LEDs LD1 to LDn are divided into the first and second groups, but the embodiment is not limited thereto. For example, the LEDs LD1 to LDn may be divided into two or more groups. Also, the second group may be connected to detect a voltage across both ends of a plurality of LEDs.

The voltage comparator 128 may output a first voltage of the voltage detector 126 or a second voltage of the reference voltage regulator 127. The switch 129 is turned on/ off according to the control signal of the voltage comparator 128 such as the first or second voltage. The load detector 130 varies the reference potential V1 according to the turn-on/off of the switch 129.

The reference potential unit 112 of the feedback control unit 110 outputs a reference potential of the load detector 130. The comparator 113 compares the reference potential V1 inputted to a first terminal(-) and a voltage V3 inputted to a second terminal(+) and outputs a signal V4 to the power source 101 according to the compared result. The voltage V3 inputted to a second terminal(+) of the comparator 113 is a voltage applied to an output terminal of the light emission unit 121 or a voltage applied to the current regulator 111. The current regulator 111 includes a resistor, and senses the fine change of a current flowing in the current regulator 111, thereby allowing a constant current to flow in the LEDs LD1 to LDn of the light emission unit 121.

An output of the comparator 113 varies according to the change of the reference potential V1, and an output V4 of the comparator 113 controls an output current of the power source 101. The feedback control unit 110 may disconnect, increase or decrease the output current of the power source 101. For example, the feedback control unit 110 increases the output V4 of the comparator 113 when the reference potential V1 outputted from the openness detection circuit 125 is reduced, but the output V4 of the comparator 113 decreases when the reference potential V1 increases.

The power source 101 regulates a current value of the DC power source according to the output V4 of the comparator 113. For example, when the output V4 of the comparator 113 increases, the power source 101 decreases a supply current. Also, the power source 101 increases the supply current in inverse proportion to the decrease in the output V4 of the comparator 113. The power source 101 may disconnect or decrease a current according to the reference potential V1 that is supplied from the feedback control unit 110 based on an opened state.

According to the embodiment, the power supply may detect an opened state of any one of the LEDs LD1 to LDn in the light emission unit 121, and feed back the control signal to the power source 101 to regulate the output current of the power source 101 according to whether the one LED is opened.

Moreover, in the embodiment, the openness detection circuit 125 of the one light emission module 120 has been described above, but respective openness detection circuits 125 of the plurality of light emission modules 120 may be disposed. A reference potential V1 of each openness detection circuit 125 may vary. Therefore, the feedback control unit 110 may disconnect, increase or decrease the output current of the power source 101 according to the reference potential V1 of each openness detection circuit 125.

Hereinafter, current and voltage characteristics of an LED array will be described in detail with reference to FIGS. 2 to 4.

Referring to FIG. 2, a plurality of LEDs in each of light emission units 121 to 124 are connected in series. An input current I is distributed to the light emission units 121 to 124, and thus, the same level of currents I1 to I4 flow in the light emission units 121 to 124, respectively. For example, when the input current I is about 1000 mA, the currents I1 to I4 OF about 250 mA flow in the light emission units 121 to 124, respectively. Furthermore, the currents of the respective light emission units 121 to 124 are summed in output terminals of the respective light emission units 121 to 124, and thus, an output current I of about 1000 mA is sensed. In this way, by setting a reference output current according to a total capacity of the parallel-connected light emission units 121 to 124, the reference output current is controlled as a constant current.

Referring to FIG. 3, when an LED circuit of each of second and third light emission units 122 and 123 among a plurality of light emission units 121 to 12n is opened, a current does not flow in the second and third light emission units 122 and 123. At this point, when the input current I is continuously supplied at about 1000 Ma, currents I1 and I4 of about 500 mA flow in the first and fourth LEDs 121 and 124, respectively. As described above, even when LED circuits of the respective light emission units 122 and 123 are opened, namely, a load capacity is reduced, currents respectively supplied to the light emission units 121 to 124 maintain a level of a current outputted from the power source 101, and thus, currents flowing in respective LEDs of the light emission units 121 and 124 increase. Heating in LEDs of the normal light emission units 121 and 124 more increases by an increased current. This accelerates the deterioration of LEDs and shortens the service life of the LEDs. When the LEDs of the light emission units 121 and 124 are opened, an overcurrent exceeding a rated current may be generated. Also, the heating of LEDs may more increases, and a soldering crack being a soldered portion may occur. Due to this reason, electrical spark occurs, causing fire.

According to the embodiment, when an LED of at least one light emission unit is opened, the power supply detects an opened state to decrease or disconnect a current outputted from the power source 101, thus protecting LEDs.

As illustrated in FIG. 4, voltage-current characteristics of an LED show that an input current is largely changed even when an input voltage is slightly changed. As a voltage becomes higher, a change slope increases sharply. Therefore, even when an LED circuit of a light emission unit is opened, the power supply controls or disconnects a current with the openness detection circuit such that a constant current flowing in each light emission unit is maintained without abnormal increase. Accordingly, constant brightness can be controlled, and LEDs can be protected.

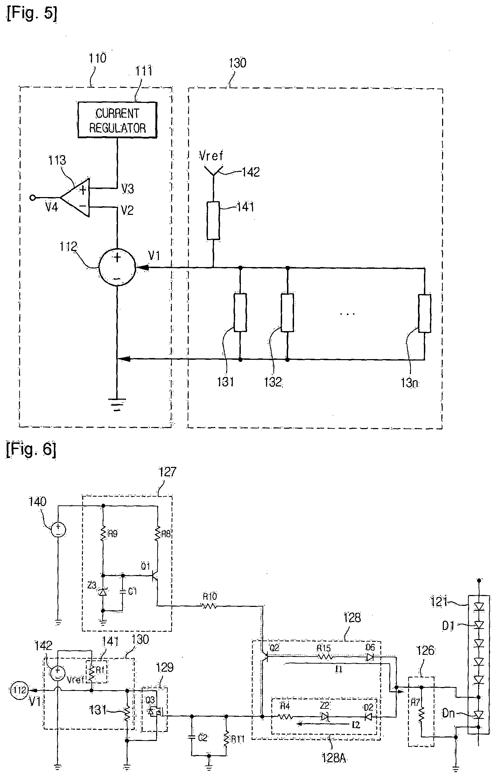

FIG. 6 is a circuit diagram illustrating in detail the openness detection circuit of FIG. 1. Referring to FIG. 6, both ends of the light emission unit 121 are respectively connected to both ends of the power source 101 of FIG. 1, and receives a DC voltage. The input terminal of the light emission unit 121 may be connected to a voltage terminal 140 of the reference voltage regulator 127, and its description refers to the above description of FIG. 1.

The voltage detector 126 includes a resistor R7, and is connected to both ends of the LED LDn of the second group. The resistor R7 is connected to an anode and cathode of the LED LDn of the second group in parallel. When the LED LDn of the second group is opened, the voltage detected by the voltage detector 126 is a high voltage, for example, is higher than a voltage that is applied to the LED LDm of the first group in a normal operation.

Also, when at least one of the LEDs LD1 to LDm in the first group is opened, the voltage detected by the voltage detector 126 as a low voltage is lower than a voltage that is applied to the LED LDn of the second group in a normal operation, for example, is detected as 0 V.

The reference voltage regulator 127 receives a voltage supplied from the power source 101 to each light emission unit 121 or receives a separate voltage 140 to operate. The reference voltage regulator 127 includes a first switch element Q1. The first switch element Q1 has a base that is connected to the voltage 140 through a resistor R9, and a collector that is connected to the voltage 140 through a resistor R8. A Zener diode Z3 and a capacitor C1 are connected in parallel between the base and a ground terminal. The first switching element Q1 is turned on/off by a second switching element Q2 of the voltage comparator 128. An emitter of the first switching element Q1 is connected to an emitter of the second switching element Q2. When the second switching element Q2 is turned on, the first switching element Q1 is turned on. On the contrary, when the second switching element Q2 is turned off, the first switching element Q1 is turned off.

At least one of the first and second switching elements Q1 and Q2 may be configured with a Bipolar Junction Transistor (BJT) or a Metal Oxide Semiconductor Field Effect Transistor (MOSFET).

In the voltage comparator 128, a resistor R15 is connected to a base of the second switching element Q2, an anode of a diode D6 is connected to the resistor R15, and a cathode of the diode D6 is connected to one end of the resistor R7 of the voltage detector 126. The voltage comparator 128 includes a first voltage output unit 128A. The first voltage output unit 128A outputs a first voltage when the voltage detector 126 detects a high voltage, but a current I2 is disconnected when a voltage lower than the high voltage is inputted thereto. Herein, the first voltage output unit 128A includes a resistor R4 connected to a collector of the second switching element Q2, a Zener diode Z2 having an anode connected to the resistor R4, and a diode D2 having a cathode connected to a cathode of the Zener diode Z2. An anode of the diode D2 is connected to one end of the resistor R7.
The Zener diode Z2 can disconnect an abnormal voltage and thus prevent an abnormal operation of a switch 129.

The first voltage output unit 128A outputs the voltage detected by the voltage detector 126 when the LED LDn of the second group is opened, in which case the first voltage is a voltage in which drop voltages of diodes are not reflected and may be lower than the voltage detected by the voltage detector 126.

The second switching element Q2 serves as a second voltage output unit. When the LEDs LD1 to LDn of the first group are opened, the voltage applied to the voltage detector 126 becomes a low voltage, which is applied to the base of the second switching element Q2, and thus, the second switching element Q2 is turned on.

Therefore, the second switching element Q2 outputs a voltage, inputted to the first switching element Q1, as a second voltage through a collector thereof. The second switching element Q2 of the voltage comparator 128 is driven by an abnormal voltage detected by the voltage detector 126.

A resistor R11 and a capacitor C2 are connected to the output terminal of the voltage comparator 128 in parallel to serve as a filter.

The switch 129 includes a third switching element Q3. The third switching element Q3 has a gate connected to the voltage comparator 128, a drain connected to a first node N1, and a source connected to a second node N2 connected to the ground terminal. The third switching element Q3 may be configured with a BJT or a MOSFET.

The load detector 130 is connected to an output terminal of the switch 129, and controls the reference potential V1 according to the turn-on/off of the switch 129. Herein, a drain of the third switching element Q3 is connected to a load resistor 131 and reference resistor Rf of the load detector 130. Another end of the load resistor 131 is connected to the ground terminal, and another end of the reference resistor Rf is connected to a reference voltage (Vref) 142. Herein, the reference resistor Rf and the reference voltage 142 are not included in the load detector 130, but may be included in the feedback control unit 110 (see FIG. 1). However, the embodiment is not limited thereto.

A first node N1 being the drain of the third switching element Q3 and a second node N2 being a source of the third switching element Q3 are connected to the load resistor 131, which outputs a reference potential V1 to a reference potential unit 112 according to the turn-on/off of the third switching element Q3.

The third switching element Q3 is turned on/off by an input voltage of the gate thereof. When at least one group among the LEDs LD1 to LDn of the light emission unit 121 is opened, the third switching element Q3 is turned on. When at least one group among the LEDs LD1 to LDn of the light emission unit 121 is not opened, the third switching element Q3 is turned off.

When the third switching element Q3 is turned on, the reference potential V1 applied to the load resistor 131 becomes a low voltage. When the third switching element Q3 is turned off, the reference potential V1 applied to the load resistor 131 becomes a high voltage or a normal voltage.

The reference potential V1 is inputted to the second terminal "-" of the comparator 113 through the reference potential unit 112 of the feedback control unit 110 of FIG. 1, and thus varies the output V4 of the comparator 113. Since the output V4 of the comparator 113 varies, an output current of the power source 101 is disconnected or reduced.

Herein, the first node N1 is connected to a first node N1 of another light emission module, and the second node N2 is connected to a second node N2 of the other light emission module. Therefore, the load resistor 131 may be connected to nodes N1 and N2 of each of a plurality of light emission modules in parallel, and detect whether openness occurs in the light emission modules by a parallel resistance value. Also, since the reference potential V1 varies according to a parallel resistance value of the load resistor 131, currents respectively flowing in the light emission units can be regulated.

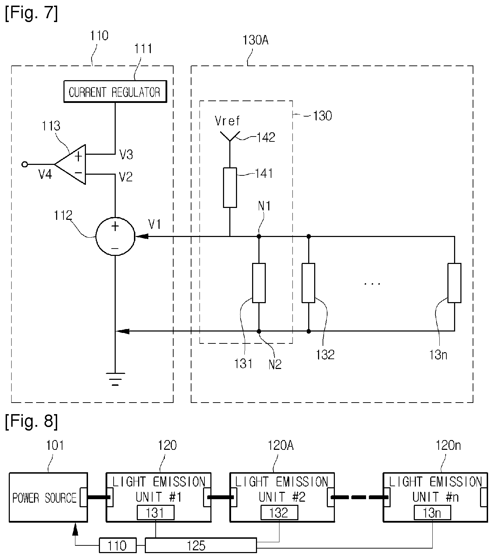

Herein, the load resistor 131 of the load detector 130, as illustrated in FIG. 7, may be connected to a plurality of load resistors 132 to 13n in each light emission unit in parallel. In this case, the reference potential V1 varies according to a parallel resistance value of the load resistors in the load detector 131, and thus, an output current inputted to each of the light emission units 121 to 12n is regulated according to the change of the reference potential V1. That is, the feedback control unit 110 may vary the output current of the power source 101 according to the reference potential V1 of the load detector 130. For example, when a current of about 1000 mA is distributed to four light emission units, about 250 mA is supplied to each of the fourth light emission units. Furthermore, when five light emission units are connected, the feedback control unit 110 increases the output current to about 1250 mA such that about 250 mA instead of 200 mA is supplied to each of the five light emission units.

In FIGS. 1, 5 and 6, a load detector of an openness detection circuit connected to one light emission unit detects a load state from the load resistor 131. In FIG. 7, however, a load detector 130A may detect the opened states of all light emission units from a plurality of load resistors 131 to 13n, and an output current supplied to all the light emission units are regulated.

The load resistors 131 to 13n are connected to an openness detection circuit of each light emission unit, and connected to each other in parallel. That is, each of the load resistors 131 to 13n is a load resistor of an openness detection circuit connected to each light emission unit. In the circuit diagram of FIG. 5, the load resistors 131 to 13n may be connected to the first and second nodes N1 and N2 of the load detector 130 in parallel. Herein, the openness detection circuit of each light emission module may use a reference voltage 142 and a reference resistor 141 in common.

The feedback control unit 110 of FIG. 1 may detect an opened state of an LED from the load detector 130A to disconnect a current supplied to each light emission unit, and regulate a current supplied to each light emission unit according to a parallel resistance value.

Referring to FIG. 8, the power source 101 and one board B1 may be connected through connectors 151 and 152, and a plurality of boards B1 to Bn may be connected through connectors 152 and 153. A plurality of light emission units 121 to 12n respectively disposed in the boards B1 to Bn may be connected to each other in parallel, in which case the connection may be implemented as wiring of the boards B1 to Bn. In each of the light emission units 121 to 12n, a plurality of LEDs are connected in series.

The respective boards B1 to Bn, the respective light emission units 121 to 12n, and the respective openness detection circuits 125 may be defined as the respective light emission modules 120 to 12n.

The openness detection circuit 125 may be disposed in the light emission unit of each of the boards B1 to Bn. Such a structure is an example. As another example, the openness detection circuit 125 may be disposed on a main board instead of the boards B1 to Bn, but the embodiment is not limited thereto.

A voltage (which is detected by each of a plurality of openness detection units 125) based on whether each light emission unit is opened varies a reference potential of an integrated load detector 130A, which varies the output of the feedback control unit 110, and thus, the output current of the power source 101 is disconnected, decreased, increased.

Herein, the integrated load detector 130A is disposed to be separated from the openness detection circuit 125. This is an exemplary configuration for convenience.

The feedback control unit 110 may detect whether the light emission units 121 to 12n are opened with a reference potential value of the integrated load detector 130A. The openness detection circuit 125 may detect the increase or decrease in the number of the boards B1 to Bn with a parallel resistance value of each board and regulate an output current suitable for the number of boards. That is, one load resistor is disposed in each board, and when load resistors of respective boards are connected in parallel, a load resistance value is changed in the circuit diagrams of FIGS. 6 and 7. Whether the number of boards increases or decreases according to the change of a reference potential may be checked with the changed load resistance value, and thus, the output current of the power source 101 may increase or decrease. Also, the changed of an individual board is sensed with the change of an individual load resistance value, and thus, the output current of the feedback control unit 110 is changed in proportion to a board increment or decrement. Connectors between the boards B 1 to Bn may be directly or indirectly connected to each other, but the embodiment is not limited thereto.

The above-described power supply may be applied to a plurality of lighting systems such as backlight units, various kinds of display devices, headlamps, streetlamps, indoor lamps, outdoor lamps, signal lights, and lighting lamps.

In the embodiments, the above-described features, structures, and effects are included in at least one embodiment, but are not necessarily limited to one embodiment. Furthermore, the features, structures, and effects that have exemplified in each embodiment may be combined or modified by those skilled in the art and implemented.
Therefore, it should be construed that contents related to the combination and modification are included in the spirit and scope of the embodiments.

According to embodiments, a light emission unit including LEDs and a lighting system such as a light unit including the light emission unit can be improved in reliability.

According to embodiments, a normally driven LED can be protected.

According to embodiments, by detecting a circuit-opened state of an arbitrary LED to automatically vary a supplied current, provided can be an openness detection circuit corresponding to a circuit-opened state of a light emission unit.

## Claims

1. A power supply comprising:
at least one light emission unit (121) comprising a plurality of serially connected Light Emitting Diodes, LEDs;
a power source (101) supplying a Direct Current, DC, voltage to the light emission unit;
an openness detection circuit (125) varying a reference potential (V1) with a LED voltage which is detected from both ends of at least one of the LEDs (Dn) in the light emission unit (121); and
a feedback control unit (110) regulating an output current of the power source (101) according to the reference potential (V1) of the openness detection circuit (125),
wherein the openness detection circuit (125) comprises:
a voltage detector (126) connected to both ends of the at least one LED (Dn), and detecting the LED voltage;
a reference voltage regulator (127) outputting a reference voltage;
a voltage comparator (128) outputting a control signal according to the LED voltage detected by the voltage detector (126);
a switch (129) turning on or off according to the control signal; and
a load detector (130) varying the reference potential (V1) according to an operating state of the switch (129),
wherein the control signal is a first voltage of the reference voltage regulator (127) or a second voltage of the voltage detector (126),
wherein the voltage comparator (128) comprises:
a voltage output unit (128A) outputting the second voltage to drive the switch (129), according to a first level of LED voltage detected by the voltage detector (126); and
a switching element (Q2) outputting the first voltage, inputted from the reference voltage regulator (127), to drive the switch (129), according to a second level of LED voltage detected by the voltage detector (126),
wherein, the voltage output unit (128A) outputs the second voltage by a circuit-openness of the at least one LED,
the switching element (Q2) outputs the first voltage by a circuit-openness of the LEDs other than the at least one LED,
wherein the load detector (130) comprises a load resistor (131) outputting different reference potentials according to the turn-on or turn-off of the switch (129),
wherein when a switching element (Q3) of the switch (129) is turned on, the reference potential applied to the load resistor (131) becomes a low voltage, and
wherein when the switching element (Q3) of the switch (129) is turned off, the reference potential applied to the load resistor (131) becomes a high voltage.

2. The power supply according to claim 1, wherein,
the voltage detector (126) is connected to both ends of a last LED, and
the reference voltage regulator (127) is connected to an input terminal of the light emission unit (121).

3. The power supply according to claim 1, wherein,
the light emission unit (121) and the openness detection circuit (125) are in plurality, and
the load detector (130) comprises a plurality of load resistors (131, ..., 13n) which are disposed in each of the openness detection circuits (125) and connected to each other in parallel.

4. The power supply according to claim 1, wherein the feedback control unit (110) disconnects the output current of the power source (101) when the reference potential of the openness detection circuit (125) is changed.

5. The power supply according to claim 3, wherein the feedback control unit (110) disconnects, increases, or decreases the output current of the power source (101) according to the change of the reference potential in the openness detection circuit (125).

6. The power supply according to claim 1, wherein the feedback control unit (110) comprises a comparator (113) which compares the reference potential of the openness detection circuit (125) and a potential of an output terminal of the light emission unit (121) to output a signal according to the compared result.

7. The power supply according to claim 1, wherein a resistor (R11) and a capacitor (C2) are connected to an output terminal of the voltage comparator (128) in parallel.

## Patentansprüche

1. Stromversorgung, Folgendes umfassend:
wenigstens eine Lichtemissionseinheit (121), die mehrere in Reihe geschaltete Leuchtdioden (*Light Emitting Diodes* - LEDs) umfasst;
eine Stromquelle (101), die eine Gleichstromspannung an die Lichtemissionseinheit liefert;
eine Offenheitserfassungsschaltung (125), die ein Bezugspotential (V1) mit einer Leuchtdiodenspannung variiert, die von beiden Enden wenigstens einer der Leuchtdioden (Dn) in der Lichtemissionseinheit (121) erfasst wird; und
eine Rückkopplungssteuereinheit (110), die einen Ausgangsstrom der Stromquelle (101) gemäß dem Bezugspotential (V1) der Offenheitserfassungsschaltung (125) regelt,
wobei die Offenheitserfassungsschaltung (125) Folgendes umfasst:
einen Spannungsprüfer (126), der an beiden Enden der wenigstens einen Leuchtdiode (Dn) angeschlossen ist und die Leuchtdiodenspannung erfasst;
einen Bezugsspannungsregler (127), der eine Bezugsspannung ausgibt;
einen Spannungskomparator (128), der ein Steuersignal gemäß der durch den Spannungsprüfer (126) erfassten Leuchtdiodenspannung ausgibt;
einen Schalter (129), der gemäß dem Steuersignal ein- oder ausschaltet; und
einen Lastdetektor (130), der das Bezugspotential (V1) gemäß einem Betriebszustand des Schalters (129) variiert,
wobei das Steuersignal eine erste Spannung des Bezugsspannungsreglers (127) oder eine zweite Spannung des Spannungsprüfers (126) ist,
wobei der Spannungskomparator (128) Folgendes umfasst:
eine Spannungsausgabeeinheit (128A), die die zweite Spannung ausgibt, um den Schalter (129) anzusteuern, gemäß eines ersten Pegels von durch den Spannungsprüfer (126) erfasster Leuchtdiodenspannung; und
ein Schaltelement (Q2), das die erste Spannung ausgibt, eingegeben von dem Bezugsspannungsregler (127), um den Schalter (129) anzusteuern, gemäß einem zweiten Pegel von durch den Spannungsprüfer (126) erfasster Leuchtdiodenspannung,
wobei die Spannungsausgabeeinheit (128A) die zweite Spannung durch eine Schaltungsoffenheit der wenigstens einen Leuchtdiode ausgibt,
das Schaltelement (Q2) die erste Spannung durch eine Schaltungsoffenheit der Leuchtdioden mit Ausnahme der wenigstens einen Leuchtdiode ausgibt,
wobei der Lastdetektor (130) einen Lastwiderstand (131) umfasst, der verschiedene Bezugspotentiale gemäß dem Einschalten oder Ausschalten des Schalters (129) ausgibt,
wobei, wenn ein Schaltelement (Q3) des Schalters (129) eingeschaltet ist, das an den Lastwiderstand (131) angelegte Bezugspotential eine Niederspannung wird, und wobei, wenn das Schaltelement (Q3) des Schalters (129) ausgeschaltet ist, das an den Lastwiderstand (131) angelegte Bezugspotential eine Hochspannung wird.

2. Stromversorgung nach Anspruch 1, wobei
der Spannungsprüfer (126) an beiden Enden wenigstens einer Leuchtdiode angeschlossen ist und
der Bezugsspannungsregler (127) an eine Eingangsklemme der Lichtemissionseinheit (121) angeschlossen ist.

3. Stromversorgung nach Anspruch 1, wobei
die Lichtemissionseinheit (121) und die Offenheitserfassungsschaltung (125) in der Mehrzahl sind, und
der Lastdetektor (130) mehrere Lastwiderstände (131, ..., 13n) umfasst, die in jeder der Offenheitserfassungsschaltungen (125) angeordnet sind und zueinander parallel geschaltet sind.

4. Stromversorgung nach Anspruch 1, wobei die Rückkopplungssteuereinheit (110) den Ausgangsstrom der Stromquelle (101) trennt, wenn das Bezugspotential der Offenheitserfassungsschaltung (125) geändert wird.

5. Stromversorgung nach Anspruch 3, wobei die Rückkopplungssteuereinheit (110) den Ausgangsstrom der Stromquelle (101) gemäß der Änderung des Bezugspotentials in der Offenheitserfassungsschaltung (125) trennt, erhöht oder verringert.

6. Stromversorgung nach Anspruch 1, wobei die Rückkopplungssteuereinheit (110) einen Komparator (113) umfasst, der das Bezugspotential der Offenheitserfassungsschaltung (125) und ein Potential einer Ausgangsklemme der Lichtemissionseinheit (121) vergleicht, um ein Signal gemäß dem verglichenen Ergebnis auszugeben.

7. Stromversorgung nach Anspruch 1, wobei ein Widerstand (R11) und ein Kondensator (C2) parallel mit einer Ausgangsklemme des Spannungskomparators (128) geschaltet sind.

## Revendications

1. Alimentation électrique comprenant:
au moins un dispositif émetteur de lumière (121) comprenant une pluralité de Diodes Electroluminescentes (LED) ;
une source de courant (101) qui alimente le dispositif émetteur de lumière en tension de courant continu (CC);
un circuit de détection d'ouverture (125) qui fait varier un potentiel de référence (V1) avec une tension de LED qui est détectée à partir des deux extrémités d'au moins l'une des LED (Dn) dans le dispositif émetteur de lumière (121); et
une unité de commande par rétroaction (110) qui régule un courant de sortie de la source de courant (101) en fonction du potentiel de référence (V1) du circuit de détection d'ouverture (125),
dans laquelle le circuit de détection d'ouverture (125) comprend:
un détecteur de tension (126) connecté aux deux extrémités de la au moins une LED (Dn), et qui détecte la tension de LED;
un régulateur de tension de référence (127) qui sort une tension de référence;
un comparateur de tension (128) qui sort un signal de commande en fonction de la tension de LED détectée par le détecteur de tension (126);
un commutateur (129) de mise en marche ou d'arrêt, en fonction du signal de commande; et
un détecteur de charge (130) qui fait varier le potentiel de référence (V1) en fonction d'un état de fonctionnement du commutateur (129),
dans laquelle le signal de commande est une première tension du régulateur de tension de référence (127) ou une seconde tension du détecteur de tension (126),
dans laquelle le comparateur de tension (128) comprend:
une unité de sortie de tension (128A) qui sort la seconde tension pour piloter le commutateur (129), selon un premier niveau de tension de LED détecté par le détecteur de tension (126); et
un élément de commutation (Q2) qui sort la première tension, qui provient du régulateur de tension de référence (127), pour piloter le commutateur (129), en fonction d'un second niveau de tension de LED détecté par le détecteur de tension (126); et
dans laquelle l'unité de sortie de tension (128A) sort la seconde tension grâce à une ouverture de circuit de la au moins une LED,
l'élément de commutation (Q2) sort la première tension grâce à une ouverture de circuit des LED autres que ladite au moins une LED,
dans laquelle le détecteur de charge (130) comprend une résistance de charge (131) qui sort différents potentiels de référence en fonction de la position marche ou arrêt du commutateur (129),
dans laquelle, lorsqu'un élément de commutation (Q3) du commutateur (129) est en position marche, le potentiel de référence appliqué à la résistance de charge (131) devient une basse tension, et
dans laquelle, lorsque l'élément de commutation (Q3) du commutateur (129) est en position arrêt, le potentiel de référence appliqué à la résistance de charge (131) devient une haute tension.

2. Alimentation électrique selon la revendication 1, dans laquelle
le détecteur de tension (126) est connecté aux deux extrémités d'une dernière LED, et
le régulateur de tension de référence (127) est connecté à une borne d'entrée du dispositif émetteur de lumière (121) .

3. Alimentation électrique selon la revendication 1, dans laquelle
le dispositif émetteur de lumière (121) et le circuit de détection d'ouverture (125) sont plusieurs, et
le détecteur de charge (130) comprend une pluralité de résistances de charge (131, ..., 13n) qui sont disposées dans chacun des circuits de détection d'ouverture (125) et connectés les unes aux autres en parallèle.

4. Alimentation électrique selon la revendication 1, dans laquelle l'unité de commande par rétroaction (110) déconnecte le courant de sortie de l'alimentation électrique (101) lorsque le potentiel de référence du circuit de détection d'ouverture (125) est modifié.

5. Alimentation électrique selon la revendication 3, dans laquelle l'unité de commande par rétroaction (110) déconnecte, augmente ou réduit le courant de sortie de l'alimentation électrique (101) en fonction du changement de potentiel de référence dans le circuit de détection d'ouverture (125).

6. Alimentation électrique selon la revendication 1, dans laquelle l'unité de commande par rétroaction (110) comprend un comparateur (113) qui compare le potentiel de référence du circuit de détection d'ouverture (125) et un potentiel d'une borne de sortie du dispositif émetteur de lumière (121) pour sortir un signal en fonction du résultat comparé.

7. Alimentation électrique selon la revendication 1, dans laquelle une résistance (R11) et un condensateur (C2) sont connectés à une borne de sortie du comparateur de tension (128), en parallèle.
